# EUROPEAN PATENT APPLICATION

(11) **EP 2 249 104 A1**
(43) Date of publication of application: **10.11.2010**
(21) Application number: 09718524.3
(22) Date of filing: 03.03.2009
(51) Int. Cl.: F25B 1/00, C09K 5/04

(54) **REFRIGERATING APPARATUS**

(30) Priority: 04.03.2008 JP 2008054089; 18.03.2008 JP 2008070357; 15.04.2008 JP 2008105949
(71) Applicant: Daikin Industries, Ltd., Osaka 530-8323 (JP)
(72) Inventor: MORIWAKI, Michio, Sakai-shi Osaka 591-8511 (JP); HARA, Hideki, Sakai-shi Osaka 592-8311 (JP); FURUI, Shuji, Sakai-shi Osaka 591-8511 (JP)
(74) Representative: HOFFMANN EITLE
(86) International application number: PCT/JP2009/000963
(87) International publication number: WO 2009/110228

(57) **Abstract**

In a refrigeration apparatus (20), refrigerant mixture in which the proportion of C₃HₘFₙ refrigerant represented by Molecular Formula 1: C₃HₘFₙ (note that "m" and "n" are integers equal to or greater than 1 and equal to or less than 5, and a relationship represented by an expression m + n = 6 is satisfied) and having a single double bond in a molecular structure is equal to or greater than 70% by mass and equal to or less than 94% by mass, and the proportion of HFC refrigerant is equal to or greater than 6% by mass and equal to or less than 30% by mass; refrigerant mixture containing the C₃HₘFₙ refrigerant and particular refrigerant such as hydrocarbons; or refrigerant mixture containing 2, 3, 3, 3-tetrafluoro-1-propene and carbon dioxide is used.

## Description

### TECHNICAL FIELD

The present invention relates to a refrigeration apparatus in which a refrigeration cycle is performed.

### BACKGROUND ART

Conventionally, a refrigeration apparatus in which a refrigeration cycle is performed has been broadly used for a cooler such as a refrigerator and a freezer for storing food etc., an air conditioner for cooling/heating a room, etc. The refrigeration apparatus of this type is disclosed in, e.g., Patent Document 1.

A refrigeration apparatus of Patent Document 1 is an air conditioner including an outdoor unit and two indoor units. In the air conditioner, the two indoor units are connected to the outdoor unit through a fluid-side communication pipe and a gas-side communication pipe. The two indoor units are connected together in parallel.

In addition, Patent Document 2 discloses refrigerant represented by Molecular Formula 1: C₃HₘFₙ (note that "m" and "n" are integers equal to or greater than 1 and equal to or less than 5, and a relationship represented by an expression m + n = 6 is satisfied) and having a single double bond in a molecular structure (hereinafter referred to as "C₃HₘFₙ refrigerant") as refrigerant for a refrigeration apparatus.

Further, Non-Patent Document 1 describes HFO-1234yf (2, 3, 3, 3-tetrafluoro-1-propene) which is one of the C₃HₘFₙ refrigerants, as refrigerant having low global warming potential (GWP).

### CITATION LIST

### PATENT DOCUMENT

PATENT DOCUMENT 1: Japanese Patent Publication No. 2002-147878
PATENT DOCUMENT 2: Japanese Patent Publication No. 04-110388
NON-PATENT DOCUMENT 1: "DuPont and Honeywell present update at VDA Alternative Refrigerant Winter Meeting in Saalfelden, Austria," DuPont [online], [searched on March 4, 2008], Internet <URL:http://refrigerants.dupont.com/Suva/en_US/pdf/registered_pdf/MAC_VDA08_HFO_1234yf.p df>

### SUMMARY OF THE INVENTION

### TECHNICAL PROBLEM

When using single component refrigerant of the C₃HₘFₙ refrigerant for the refrigeration apparatus, various problems arise. For example, the C₃HₘFₙ refrigerant is so-called "low-pressure refrigerant." Thus, when using the single component refrigerant of the C₃HₘFₙ refrigerant, a theoretical operational efficiency (coefficient of performance) increases. However, in reality, an influence of a pressure loss of the refrigerant is relatively large, and an actual operational efficiency may be extremely degraded due to the pressure loss.

The present invention has been made in view of foregoing, and it is an object of the present invention to, in a refrigeration apparatus using refrigerant containing the C₃HₘFₙ refrigerant, solve the problems arisen when using the single component refrigerant of the C₃HₘFₙ refrigerant by using an appropriate composition ratio of refrigerant mixture to which HFC refrigerant is added, or by using refrigerant mixed with particular refrigerant other than the HFC refrigerant.

### SOLUTION TO THE PROBLEM

A first aspect of the invention is intended for a refrigeration apparatus including a refrigerant circuit (10) in which a refrigeration cycle is performed by circulating refrigerant. The refrigerant circuit (10) of the refrigeration apparatus is filled with refrigerant mixture in which the proportion of C₃HₘFₙ refrigerant is equal to or greater than 70% by mass and equal to or less than 94% by mass, and the proportion of HFC refrigerant is equal to or greater than 6% by mass and equal to or less than 30% by mass.

In the first aspect of the invention, the refrigerant mixture containing the C₃HₘFₙ refrigerant and the HFC refrigerant is used. In the refrigerant mixture, the proportion of the C₃HₘFₙ refrigerant is equal to or greater than 70% by mass and equal to or less than 94% by mass, and the proportion of the HFC refrigerant is equal to or greater than 6% by mass and equal to or less than 30% by mass.

A second aspect of the invention is intended for the refrigeration apparatus of the first aspect of the invention, in which HFC-32 (difluoromethane) is used as the HFC refrigerant in the refrigerant mixture.

In the second aspect of the invention, the HFC refrigerant used for the refrigerant mixture is the HFC-32.

A third aspect of the invention is intended for the refrigeration apparatus of the second aspect of the invention, in which only the HFC-32 is used as the HFC refrigerant in the refrigerant mixture, the proportion of the C₃HₘFₙ refrigerant is equal to or greater than 77% by mass and equal to or less than 87% by mass, and the proportion of the HFC-32 is equal to or greater than 13% by mass and equal to or less than 23% by mass.

In the third aspect of the invention, the refrigerant mixture is used, in which the proportion of the C₃HₘFₙ refrigerant is equal to or greater than 77% by mass and equal to or less than 87% by mass, and the proportion of the HFC-32 is equal to or greater than 13% by mass and equal to or less than 23% by mass.

A fourth aspect of the invention is intended for the refrigeration apparatus of the third aspect of the invention, in which, in the refrigerant mixture, the proportion of the C₃HₘFₙ refrigerant is equal to or greater than 77% by mass and equal to or less than 79% by mass, and the proportion of the HFC-32 is equal to or greater than 21 % by mass and equal to or less than 23% by mass.

In the fourth aspect of the invention, the refrigerant mixture is used, in which the proportion of the C₃HₘFₙ refrigerant is equal to or greater than 77% by mass and equal to or less than 79% by mass, and the proportion of the HFC-32 is equal to or greater than 21 % by mass and equal to or less than 23% by mass.

A fifth aspect of the invention is intended for the refrigeration apparatus of the first aspect of the invention, in which HFC-125 (pentafluoroethane) is used as the HFC refrigerant in the refrigerant mixture.

In the fifth aspect of the invention, the HFC refrigerant used for the refrigerant mixture is the HFC-125. The C₃HₘFₙ refrigerant is low flammable refrigerant. Thus, in the fifth aspect of the invention, the HFC-125 which is non-flammable refrigerant is added to the C₃HₘFₙ refrigerant.

A sixth aspect of the invention is intended for the refrigeration apparatus of the fifth aspect of the invention, in which, in the refrigerant mixture, the proportion of the HFC-125 is equal to or greater than 10% by mass and equal to or less than 30% by mass.

In the sixth aspect of the invention, the refrigerant mixture is used, in which the proportion of the HFC-125 is equal to or greater than 10% by mass. In the sixth aspect of the invention, the HFC-125 of equal to or greater than 10% by mass is added in order to reduce flammability of the refrigerant mixture.

A seventh aspect of the invention is intended for the refrigeration apparatus of the sixth aspect of the invention, in which, in the refrigerant mixture, the proportion of the HFC-125 is equal to or greater than 10% by mass and equal to or less than 20% by mass.

In the seventh aspect of the invention, the refrigerant mixture is used, in which the proportion of the HFC-125 is equal to or greater than 10% by mass and equal to or less than 20% by mass.

A eighth aspect of the invention is intended for a refrigeration apparatus including a refrigerant circuit (10) in which a refrigeration cycle is performed by circulating refrigerant. The refrigerant circuit (10) of the refrigeration apparatus is filled with refrigerant mixture containing C₃HₘFₙ refrigerant and hydrocarbons.

In the eighth aspect of the invention, as the refrigerant of the refrigerant circuit (10), the refrigerant mixture made by adding hydrocarbons to the C₃HₘFₙ refrigerant is used.

A ninth aspect of the invention is intended for a refrigeration apparatus including a refrigerant circuit (10) in which a refrigeration cycle is performed by circulating refrigerant. The refrigerant circuit (10) of the refrigeration apparatus is filled with refrigerant mixture containing C₃HₘFₙ refrigerant and dimethyl ether.

In the ninth aspect of the invention, as the refrigerant of the refrigerant circuit (10), the refrigerant mixture made by adding dimethyl ether which is so-called "high-pressure refrigerant," to the C₃HₘFₙ refrigerant is used.

A tenth aspect of the invention is intended for a refrigeration apparatus including a refrigerant circuit (10) in which a refrigeration cycle is performed by circulating refrigerant. The refrigerant circuit (10) of the refrigeration apparatus is filled with refrigerant mixture containing C₃HₘFₙ refrigerant and bis-trifluoromethyl-sulfide.

In the tenth aspect of the invention, as the refrigerant of the refrigerant circuit (10), the refrigerant mixture made by adding bis-trifluoromethyl-sulfide which is so-called "high-pressure refrigerant," to the C₃HₘFₙ refrigerant is used.

An eleventh aspect of the invention is intended for a refrigeration apparatus including a refrigerant circuit (10) in which a refrigeration cycle is performed by circulating refrigerant. The refrigerant circuit (10) of the refrigeration apparatus is filled with refrigerant mixture containing C₃HₘFₙ refrigerant and helium.

In the eleventh aspect of the invention, as the refrigerant of the refrigerant circuit (10), the refrigerant mixture made by adding helium which is so-called "high-pressure refrigerant," to the C₃HₘFₙ refrigerant is used.

A twelfth aspect of the invention is intended for the refrigeration apparatus of any one of the first to eleventh aspects of the invention, in which, in the refrigerant mixture, HFO-1234yf (2, 3, 3, 3-tetrafluoro-1-propene) is used as the C₃HₘFₙ refrigerant.

In the twelfth aspect of the invention, the C₃HₘFₙ refrigerant used for the refrigerant mixture is the HFO-1234yf.

A thirteenth aspect of the invention is intended for a refrigeration apparatus including a refrigerant circuit (10) in which a refrigeration cycle is performed by circulating refrigerant. The refrigerant circuit (10) of the refrigeration apparatus is filled with refrigerant mixture containing HFO-1234yf and carbon dioxide.

In the thirteenth aspect of the invention, as the refrigerant of the refrigerant circuit (10), the refrigerant mixture made by mixing carbon dioxide which is so-called "high-pressure refrigerant," to the HFO-1234yf is used.

A fourteenth aspect of the invention is intended for the refrigeration apparatus of any one of the first to thirteenth aspects of the invention, in which a heat exchanger (11, 15) for exchanging heat between air and refrigerant is connected to the refrigerant circuit (10), and the air exchanging heat with the refrigerant in the heat exchanger (11, 15) is supplied to a room.

In the fourteenth aspect of the invention, a refrigeration apparatus (20) supplies air exchanging heat with refrigerant in the heat exchanger (11, 15) connected to the refrigerant circuit (10), to the room. That is, the refrigeration apparatus (20) serves as an air conditioning system for adjusting a room temperature.

A fifteenth aspect of the invention is intended for the refrigeration apparatus of the fourteenth aspect of the invention, in which only a heating operation is performed, in which air heated by refrigerant in the heat exchanger (11, 15) is supplied to a room.

In the fifteenth aspect of the invention, the refrigeration apparatus (20) performs only the heating operation in which air heated in the heat exchanger (11, 15) is supplied to the room. That is, the refrigeration apparatus (20) serves as an air conditioning system only for heating.

A sixteenth aspect of the invention is intended for the refrigeration apparatus of the fourteenth or fifteenth aspect of the invention, in which, in the refrigerant circuit (10), an outdoor unit (22) provided outside a room is connected to indoor units (51) provided inside the room, through communication pipes (18, 19).

In the sixteenth aspect of the invention, the indoor units (51) are connected to the outdoor unit (22) through the communication pipes (18, 19). In the refrigeration apparatus (20), if the indoor units (51) are installed apart from the outdoor unit (22), the length of the communication pipes (18, 19) increases, resulting in an increase in a pressure loss of refrigerant during an operation.

A seventeenth aspect of the invention is intended for the refrigeration apparatus of any one of the first to thirteenth aspects of the invention, in which a heat exchanger (43) for exchanging heat between water and refrigerant is connected to the refrigerant circuit (10), and the water is heated by the refrigerant in the heat exchanger (43) to boil the water.

In the seventeenth aspect of the invention, the refrigeration apparatus (20) heats water by refrigerant in the heat exchanger (43). The refrigeration apparatus (20) supplies the water heated in the heat exchanger (43) (i.e., hot water) to a heat exchanger for air conditioning, a bathtub of a bath, etc.

### ADVANTAGES OF THE INVENTION

In each of the first to seventh aspects of the invention, the refrigerant mixture in which the C₃HₘFₙ refrigerant and the HFC refrigerant are mixed at a predetermined ratio is used. An influence of a pressure loss of refrigerant on an operation of the refrigeration apparatus (20) will be described below. For example, if the inlet pressure of the heat exchanger is 2000 kPa, and the pressure loss of refrigerant caused in the entire heat exchanger is 100 kPa, the outlet pressure is 1900 kPa, resulting in the ratio of the pressure loss to the inlet pressure is 5% (100/2000 = 0.05). If the inlet pressure of the heat exchanger is 1000 kPa, and the pressure loss of refrigerant caused in the entire heat exchanger is 100 kPa, the outlet pressure is 900 kPa, resulting in the ratio of the pressure loss to the inlet pressure is 10% (100/1000 = 0.10). if the inlet pressure of the heat exchanger is 500 kPa, and the pressure loss of refrigerant caused in the entire heat exchanger is 100 kPa, the outlet pressure is 400 kPa, resulting in the ratio of the pressure loss to the inlet pressure is 20% (100/500 = 0.20). As described above, the higher operating pressure of refrigerant results in the smaller influence of the pressure loss of refrigerant on the operation of the refrigeration apparatus (20). In the present invention, the C₃HₘFₙ refrigerant and the HFC refrigerant are mixed at the predetermined ratio, thereby increasing, e.g., the operating pressure of refrigerant, and reducing the influence of the pressure loss of refrigerant on the operation of the refrigeration apparatus (20). Thus, e.g., an actual operational efficiency of the refrigeration apparatus (20) can be improved, thereby solving problems arisen when the single component refrigerant of the C₃HₘFₙ refrigerant is used.

When using the HFC-32 as the HFC refrigerant as in the second aspect of the invention, the refrigerant mixture is preferably used, in which the proportion of the C₃HₘFₙ refrigerant is equal to or greater than 77% by mass and equal to or less than 87% by mass, and the proportion of the HFC-32 is equal to or greater than 13% by mass and equal to or less than 23% by mass as in the third aspect of the invention. More preferably, the refrigerant mixture is used, in which the proportion of the C₃HₘFₙ refrigerant is equal to or greater than 77% by mass and equal to or less than 79% by mass, and the proportion of the HFC-32 is equal to or greater than 21% by mass and equal to or less than 23% by mass as in the fourth aspect of the invention.

In the fifth aspect of the invention, the HFC-125 which is non-flammable refrigerant is added to the C₃HₘFₙ refrigerant. Thus, the refrigerant of the refrigerant circuit (10) becomes flame-resistant, thereby improving reliability of the refrigeration apparatus (20).

In the eighth aspect of the invention, the refrigerant mixture made by adding hydrocarbons to the C₃HₘFₙ refrigerant is used. Thus, if hydrocarbons are so-called "high-pressure refrigerant," the operating pressure of refrigerant can be higher than that when using the single component refrigerant of the C₃HₘFₙ refrigerant. Consequently, while reducing the influence of the pressure loss of refrigerant on the operation of the refrigeration apparatus (20), the actual operational efficiency of the refrigeration apparatus (20) can be improved.

In each of the ninth to eleventh aspects of the invention, the refrigerant mixture made by adding particular refrigerant which is so-called "high-pressure refrigerant" (dimethyl ether, bis-trifluoromethyl-sulfide, or helium) to the C₃HₘFₙ refrigerant is used. Thus, the operating pressure of refrigerant can be higher than that when using the single component refrigerant of the C₃HₘFₙ refrigerant. Consequently, while reducing the influence of the pressure loss of refrigerant on the operation of the refrigeration apparatus (20), the actual operational efficiency of the refrigeration apparatus (20) can be improved.

In the thirteenth aspect of the invention, the refrigerant mixture made by adding carbon dioxide which is so-called "high-pressure refrigerant," to the HFO-1234yf is used. Thus, the operating pressure of refrigerant can be higher than that when using the single component refrigerant of the C₃HₘFₙ refrigerant. Consequently, while reducing the influence of the pressure loss of refrigerant on the operation of the refrigeration apparatus (20), the actual operational efficiency of the refrigeration apparatus (20) can be improved.

In the sixteenth aspect of the invention, as the refrigerant of the refrigeration apparatus (20) which increases the pressure loss of refrigerant during the operation when the indoor units (51) are installed apart from the outdoor unit (22), the refrigerant mixture is used, in which the proportion of the C₃HₘFₙ refrigerant is equal to or greater than 70% by mass and equal to or less than 94% by mass, and the proportion of the HFO refrigerant is equal to or greater than 6% by mass and equal to or less than 30% by mass. Thus, even if the indoor units (51) are installed apart from the outdoor unit (22), the pressure loss of refrigerant during the operation does not significantly increase, thereby not significantly degrading the actual operational efficiency.

### BRIEF DESCRIPTION OF THE DRAWINGS

[FIG. 1] FIG. 1 is a schematic configuration diagram of a refrigeration apparatus of a first embodiment.
[FIG. 2] FIG. 2 is a schematic configuration diagram of a refrigeration apparatus of a second embodiment.
[FIG. 3] FIG. 3 is a schematic configuration diagram of a refrigeration apparatus of a variation of the second embodiment.

### DESCRIPTION OF REFERENCE CHARACTERS

- 10: Refrigerant Circuit
- 20: Refrigeration Apparatus
- 22: Outdoor Unit
- 30: Compressor
- 51: Indoor Unit

### DESCRIPTION OF EMBODIMENTS

Embodiments of the present invention will be described in detail hereinafter with reference to the drawings.

### <<First Embodiment>>

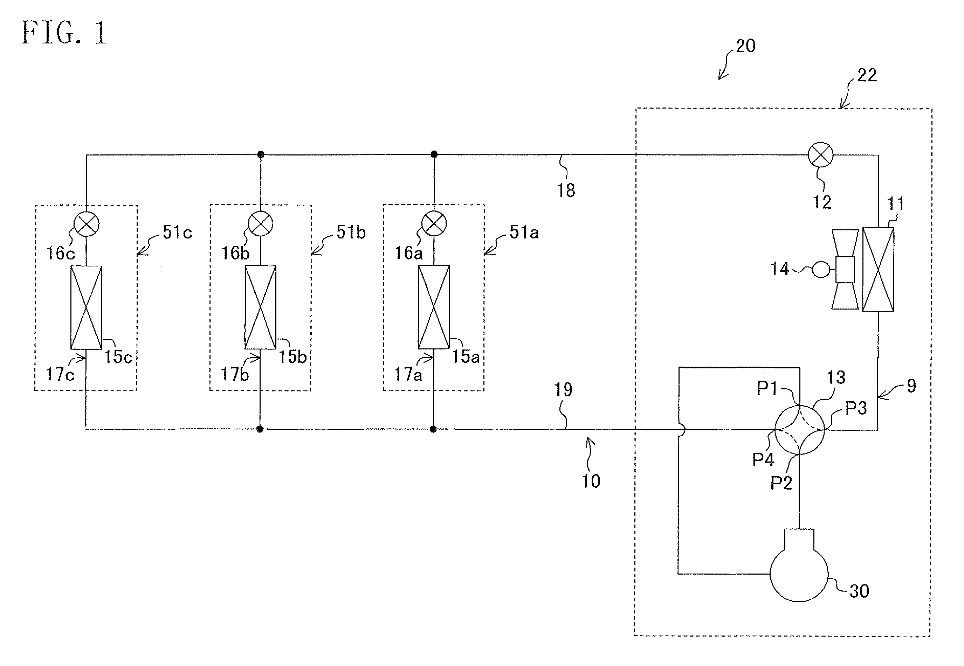

A first embodiment of the present invention will be described. The first embodiment is an air conditioning system (20) including a refrigeration apparatus of the present invention. As illustrated in FIG. 1, the air conditioning system (20) of the first embodiment includes an outdoor unit (22) and three indoor units (51 a, 51b, 51c). Note that the number of the indoor units (51) is set forth merely for purposes of examples, and not a plurality of indoor units but a single indoor unit may be provided.

The air conditioning system (20) includes a refrigerant circuit (10) filled with refrigerant to perform a refrigeration cycle. The refrigerant circuit (10) includes an outdoor circuit (9) accommodated in the outdoor unit (22); and an indoor circuit (17a, 17b, 17c) accommodated in each of the indoor units (51). The indoor circuits (17a, 17b, 17c) are connected to the outdoor circuit (9) in parallel with each other through a fluid-side communication pipe (18) and a gas-side communication pipe (19).

The refrigerant circuit (10) is filled with refrigerant mixture which contains a single type of C₃HₘFₙ refrigerant (refrigerant represented by Molecular Formula 1: C₃HₘFₙ (note that "m" and "n" are integers equal to or greater than 1 and equal to or less than 5, and a relationship represented by an expression m + n = 6 is satisfied) and having a single double bond in a molecular structure), and one or more types of HFC refrigerants; and in which the proportion of the C₃HₘFₙ refrigerant is equal to or greater than 70% by mass and equal to or less than 94% by mass, and the proportion of the HFC refrigerant is equal to or greater than 6% by mass and equal to or less than 30% by mass. In the specification of the present application, the "HFC refrigerant" means hydrofluorocarbon refrigerant which does not contain the C₃HₘFₙ refrigerant.

Specifically, the refrigerant mixture of the first embodiment contains 2, 3, 3, 3-tetrafluoro-1-propene (HFO-1234yf) which is the C₃HₘFₙ refrigerant; and HFC-32 (difluoromethane) which is the HFC refrigerant. The refrigerant mixture contains a single type of HFC refrigerant. In the first embodiment, the refrigerant mixture is used, in which the proportion of the HFO-1234yf is 78.2% by mass, and the proportion of the HFC-32 is 21.8% by mass. In such a case, global warming potential is equal to or less than 150. Note that a chemical Formula of the HFO-1234yf is represented by an expression CF₃ - CF = CH₂, and a chemical formula of the HFC-32 is represented by an expression CH₂F₂.

### <Configuration of Outdoor Circuit>

The outdoor circuit (9) includes a compressor (30); an outdoor heat exchanger (11); an outdoor expansion valve (12); and a four-way switching valve (13).

The compressor (30) is, e.g., a hermetic high-pressure dome scroll-type compressor. Electric power is supplied to the compressor (30) through an inverter. A discharge side of the compressor (30) is connected to a second port (P2) of the four-way switching valve (13), and a suction side is connected to a first port (P1) of the four-way switching valve (13).

The outdoor heat exchanger (11) is a cross-fin type fin-and-tube heat exchanger. An outdoor fan (14) is provided near the outdoor heat exchanger (11). In the outdoor heat exchanger (11), heat is exchanged between outdoor air and refrigerant. One end of the outdoor heat exchanger (11) is connected to a third port (P3) of the four-way switching valve (13), and the other end is connected to the outdoor expansion valve (12). A fourth port (P4) of the four-way switching valve (13) is connected to a gas-side end of the outdoor circuit (9).

The outdoor expansion valve (12) is provided between the outdoor heat exchanger (11) and a fluid-side end of the outdoor circuit (9). The outdoor expansion valve (12) is an electric expansion valve with variable opening.

The four-way switching valve (13) is switchable between a first state in which the first port (P1) communicates with the fourth port (P4), and the second port (P2) communicates with the third port (P3) (state indicated by a solid line in FIG. 1); and a second state in which the first port (P1) communicates with the third port (P3), and the second port (P2) communicates with the fourth port (P4) (state indicated by a dashed line in FIG. 1).

### <Configuration of Indoor Circuit>

In each of the indoor circuits (17a, 17b, 17c), an indoor heat exchanger (15a, 15b, 15c) and an indoor expansion valve (16a, 16b, 16c) are provided in the order from a gas-side end toward a fluid-side end.

The indoor heat exchanger (15a-15c) is a cross-fin type fin-and-tube heat exchanger. An indoor fan (not shown in the figure) is provided near the indoor heat exchanger (15a-15c). In the indoor heat exchanger (15a-15c), heat is exchanged between room air and refrigerant. In addition, the indoor expansion valve (16a-16c) is an electric expansion valve with variable opening.

### Operation

An operation of the air conditioning system (20) will be described. The air conditioning system (20) can perform a cooling operation and a heating operation, and switches between the cooling operation and the heating operation by the four-way switching valve (13).

### <Cooling Operation>

In the cooling operation, the four-way switching valve (13) is set to the first state. In such a state, when operating the compressor (30), high-pressure refrigerant discharged from the compressor (30) is condensed by releasing heat to outdoor air in the outdoor heat exchanger (11). The refrigerant condensed in the outdoor heat exchanger (11) is distributed to each of the indoor circuits (17a-17c). The pressure of the refrigerant flowing into the indoor circuit (17a-17c) is reduced by the indoor expansion valve (16a-16c), and then such refrigerant is evaporated by absorbing heat from room air in the indoor heat exchanger (15a-15c). Meanwhile, room air is cooled and supplied to a room.

The refrigerant evaporated in the indoor circuit (17a-17c) joins the refrigerant evaporated in the other indoor circuit (17a-17c), and then is returned to the outdoor circuit (9). In the outdoor circuit (9), the refrigerant returned from the indoor circuits (17a-17c) is recompressed in the compressor (30), and then such refrigerant is discharged. During the cooling operation, the opening of the indoor expansion valve (16a-16c) is adjusted so that the degree of superheat of refrigerant at an outlet port of the indoor heat exchanger (15a-15c) is a constant value (e.g., 5°C).

### <Heating Operation>

In the heating operation, the four-way switching valve (13) is set to the second state. In such a state, when operating the compressor (30), high-pressure refrigerant discharged from the compressor (30) is distributed to each of the indoor circuits (17a-17c). The refrigerant flowing into the indoor circuit (17a-17c) is condensed by releasing heat to room air in the indoor heat exchanger (15a-15c). Meanwhile, room air is heated and supplied to a room. The refrigerant condensed in the indoor heat exchanger (15a-15c) joins the refrigerant condensed in the other indoor heat exchanger (15a-15c), and then is returned to the outdoor circuit (9).

In the outdoor circuit (9), the pressure of the refrigerant returned from the indoor circuits (17a-17c) is reduced by the outdoor expansion valve (12), and then such refrigerant is evaporated by absorbing heat from outdoor air in the outdoor heat exchanger (11). The refrigerant evaporated in the outdoor heat exchanger (11) is recompressed in the compressor (30), and then such refrigerant is discharged. During the heating operation, the opening of the indoor expansion valve (16a-16c) is adjusted so that the degree of supercool of refrigerant at the outlet port of the indoor heat exchanger (15a-15c) is a constant value (e.g., 5°C).

### Advantages of First Embodiment

In the present embodiment, the HFO-1234yf and the HFC-32 are mixed at a predetermined ratio, thereby increasing an operating pressure of refrigerant. This reduces an influence of a pressure loss of refrigerant during circulating in the refrigerant circuit (10) on the operation of the air conditioning system (20), thereby improving an actual operational efficiency of the air conditioning system (20). Thus, problems arisen when using the single component refrigerant of the C₃HₘFₙ refrigerant can be solved.

In the refrigerant mixture, the proportion of the HFO-1234yf may be equal to or greater than 70% by mass and equal to or less than 94% by mass, and the proportion of the HFC-32 may be equal to or greater than 6% by mass and equal to or less than 30% by mass. Refrigerant mixture containing, e.g., the HFO-1234yf of 77.4% by mass and the HFC-32 of 22.6% by mass may be used. In the refrigerant mixture, the proportion of the HFO-1234yf may be preferably equal to or greater than 77% by mass and equal to or less than 87% by mass, and the proportion of the HFC-32 may be preferably equal to or greater than 13% by mass and equal to or less than 23% by mass. More preferably, the proportion of the HFO-1234yf may be equal to or greater than 77% by mass and equal to or less than 79% by mass, and the proportion of the HFC-32 may be equal to or greater than 21% by mass and equal to or less than 23% by mass. In this respect, the same is true for a second embodiment and other embodiments.

In the air conditioning system (20) of the present embodiment, the indoor circuits (17a-17c) of the indoor units (51a-51c) are connected to the outdoor circuit (9) of the outdoor unit (22) through the communication pipes (18, 19). The indoor units (51) of the air conditioning system (20) may be installed apart from the outdoor unit (22). In such a case, the pressure loss of refrigerant during circulating in the refrigerant circuit (10) increases. In the present embodiment, as refrigerant of the air conditioning system (20), which may cause the increase in the pressure loss of refrigerant during the operation, the refrigerant mixture is used, in which the proportion of the HFO-1234yf is 78.2% by mass, and the proportion of the HFC-32 is 21.8% by mass. Thus, even if the indoor units (51) are installed apart from the outdoor unit (22), the pressure loss of refrigerant during the operation does not significantly increase, thereby not significantly degrading the actual operational efficiency.

### Variation of First Embodiment

A first variation of the first embodiment is an air conditioning system (20) only for heating. Unlike the first embodiment, in the air conditioning system (20), a four-way switching valve (13) is not provided in an outdoor circuit (9). A discharge side of a compressor (30) is connected to a gas side of each of indoor circuits (17a-17c). A suction side of the compressor (30) is connected to a gas side of an outdoor heat exchanger (11). In the air conditioning system (20), only a heating operation is performed, in which an indoor heat exchanger (15a-15c) is operated as a condenser, and the outdoor heat exchanger (11) is operated as an evaporator.

### <<Second Embodiment>>

A second embodiment of the present invention will be described. The second embodiment is a hot-water supply system (20) including the refrigeration apparatus of the present invention.

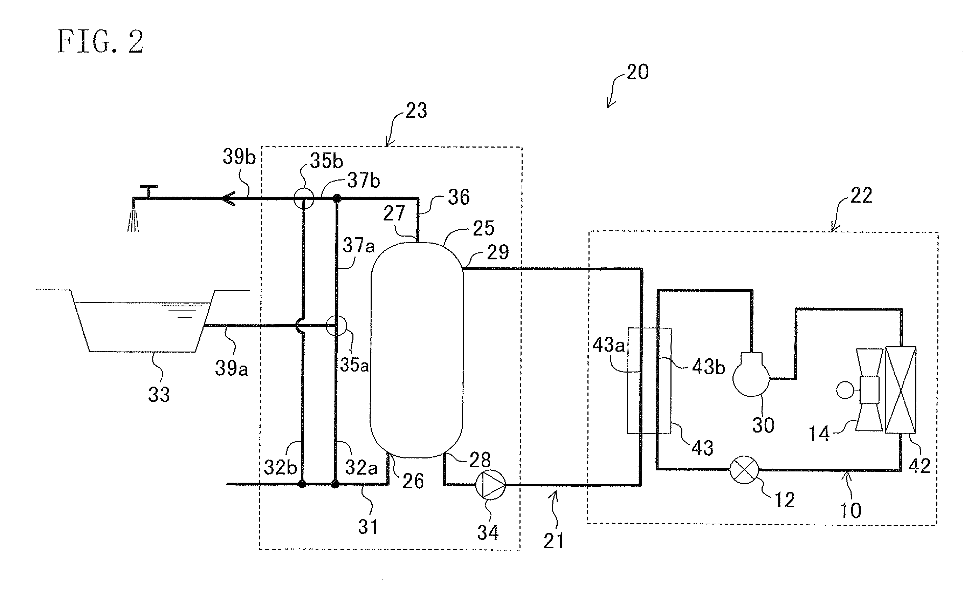

As illustrated in FIG. 2, the hot-water supply system (20) of the present embodiment includes a hot-water storage unit (23) and a heat source unit (22). Both of the hot-water storage unit (23) and the outdoor unit (22) are installed outside a room, and are connected together through pipes to form a circulation path (21) which will be described later.

The hot-water storage unit (23) includes a hot-water storage tank (25) which is an elongated cylindrical hermetic container. A water supply port (26), a hot-water outlet port (27), a water discharge port (28), and a hot-water inlet port (29) are formed in the hot-water storage tank (25). The water supply port (26) and the water discharge port (28) are formed in a bottom section of the hot-water storage tank (25). The hot-water outlet port (27) is formed in a top section of the hot-water storage tank (25). The hot-water inlet port (29) is formed in an upper section of a side wall of the hot-water storage tank (25).

An outlet end of a water supply path (31) for supplying city water to the hot-water storage tank (25) is connected to the water supply port (26) of the hot-water storage tank (25). A plurality of branched water supply paths (32a, 32b) are connected to the water supply path (31). Each of the branched water supply paths (32a, 32b) is connected to a mixing valve (35a, 35b). On the other hand, an inlet end of a hot-water supply path (36) is connected to the hot-water outlet port (27) of the hot-water storage tank (25). A plurality of branched hot-water supply paths (37a, 37b) are connected to the hot-water supply path (36). Each of the branched hot-water supply paths (37a, 37b) is connected to the mixing valve (35a, 35b). The single branched water supply path (32a, 32b) and the single branched hot-water supply path (37a, 37b) are connected to the mixing valve (35a, 35b).

Three ports are formed in the mixing valve (35a, 35b). In the mixing valve (35a, 35b), a first port is connected to the branched water supply path (32a, 32b); a second port is connected to the branched hot-water supply path (37a, 37b); and a third port is connected to a utilization-side flow path (39) extending toward a utilization side such as a bathtub (33) of a bath, a kitchen, and a washstand. The mixing valve (35a,35b) mixes water flowing into the first port with water flowing into the second port to send such water through the third port.

An inlet end of the circulation path (21) is connected to the water discharge port (28) of the hot-water storage tank (25), and an outlet end of the circulation path (21) is connected to the hot-water inlet port (29). The circulation path (21) is provided so as to cross between the hot-water storage unit (23) and the outdoor unit (22).

A pump mechanism (34) which is a so-called "circulation pump" is provided in the circulation path (21). A water-heat exchanger (43) which will be described later is connected to the circulation path (21). The circulation path (21) is configured so that water sent from the hot-water storage unit (23) by the pump mechanism (34) is returned to the hot-water storage unit (23) after passing through the heat source unit (22).

The heat source unit (22) includes a refrigerant circuit (10) in which a compressor (30), an air-heat exchanger (42), the water-heat exchanger (43), an expansion valve (12) are provided. The refrigerant circuit (10) is filled with refrigerant mixture containing HFO-1234yf of 78.2% by mass and HFC-32 of 21.8% by mass. An outdoor fan (14) is provided near the air-heat exchanger (42).

In the refrigerant circuit (10), a discharge side of the compressor (30) is connected to the water-heat exchanger (43), and a suction side of the compressor (30) is connected to the air-heat exchanger (42). The expansion valve (12) is arranged between the air-heat exchanger (42) and the water-heat exchanger (43).

The compressor (30) has variable operational capacity. The air-heat exchanger (42) is a cross-fin type fin-and-tube heat exchanger. The expansion valve (12) is an electric expansion valve with variable opening.

The water-heat exchanger (43) is a so-called "plate-type heat exchanger," and includes a plurality of first flow paths (43a) and a plurality of second flow paths (43b) which are separated from each other. The water-heat exchanger (43) is configured so that heat is exchanged between fluid in the first flow path (43a) and fluid in the second flow path (43b). The first flow path (43a) is connected to the circulation path (21). Water taken from the bottom section of the hot-water storage tank (25) flows into the first flow path (43a). On the other hand, the second flow path (43b) is connected to the refrigerant circuit (10), and is arranged between the compressor (30) and the expansion valve (12). High-temperature high-pressure refrigerant discharged from the compressor (30) flows into the second flow path (43b).

### Operation

A water boiling operation of the hot-water supply system (20) of the second embodiment will be described. The water boiling operation is performed by operating the compressor (30) and the pump mechanism (34).

When operating the compressor (30), a vapor compression refrigeration cycle is performed by circulating refrigerant in the refrigerant circuit (10). In the refrigerant circuit (10) in which the refrigerant cycle is performed, refrigerant is compressed in the compressor (30), and then releases heat to water of the first flow path (43a) in the water-heat exchanger (43). Subsequently, the pressure of the refrigerant is reduced by the outdoor expansion valve (12), and such refrigerant absorbs heat from outdoor air in the air-heat exchanger (42). The water-heat exchanger (43) is operated as a radiator, and the air-heat exchanger (42) is operated as an evaporator.

Meanwhile, when operating the pump mechanism (34), water in the hot-water storage tank (25) circulates through the circulation path (21). In the circulation path (21), water taken through the water discharge port (28) of the hot-water storage tank (25) is heated by refrigerant in the first flow path (43a) of the water-heat exchanger (43), and then is returned to the hot-water storage tank (25) through the hot-water inlet port (29). The water heated in the water-heat exchanger (43) flows into the hot-water storage tank (25) to increase a hot-water amount.

### Variation of Second Embodiment

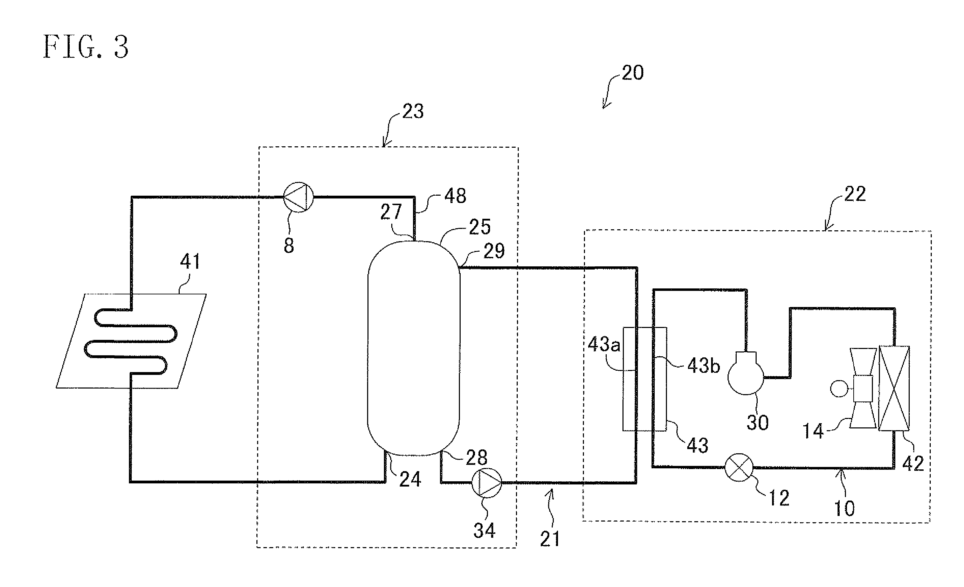

A variation of the second embodiment will be described. As illustrated in FIG. 3, in such a variation, a floor heating path (48) in which a floor heating radiator (41) is provided is connected to a hot-water storage tank (25). An inlet end of the floor heating path (48) is connected to a hot-water outlet port (27) of the hot-water storage tank (25), and an outlet end is connected to a hot-water return port (24) of the hot-water storage tank (25). A pump mechanism (8) is provided upstream of the floor heating path (48). As in the second embodiment, the refrigerant mixture containing the HFO-1234yf of 78.2% by mass and the HFC-32 of 21.8% by mass is used in the refrigerant circuit (10).

In the floor heating path (48), when operating the pump mechanism (8), hot-water flowing out through the hot-water outlet port (27) of the hot-water storage tank (25) is supplied to the floor heating path (48). Subsequently, the hot-water is used for heating a room, and then such hot-water is cooled. The water cooled in the floor heating path (48) is returned to the hot-water storage tank (25) through the hot-water return port (24). In the floor heating path (48), water circulates between the hot-water storage tank (25) and the floor heating path (48).

### <<Other Embodiments>>

The foregoing embodiments may have the following configurations.

In the foregoing embodiments, the C₃HₘFₙ refrigerant used for the refrigerant mixture may be refrigerant other than the HFO-1234yf. Specifically, instead of using the HFO-1234yf, any of the following may be used: 1, 2, 3, 3, 3-pentafluoro-1-propene (referred to as "HFO-1225ye," and a chemical formula thereof is represented by an expression CF₃ - CF = CHF); 1, 3, 3, 3-tetrafluoro-1-propene (referred to as "HFO-1234ze," and a chemical formula thereof is represented by an expression CF₃ - CH = CHF); 1, 2, 3, 3-tetrafluoro-1-propene (referred to as "HFO-1234ye," and a chemical formula thereof is represented by an expression CHF₂ - CF = CHF); 3, 3, 3-trifluoro-1-propene (referred to as "HFO-1243zf," and a chemical formula thereof is represented by an expression CF₃ - CH = CH₂); 1, 2, 2-trifluoro-1-propene (a chemical formula thereof is represented by an expression CH₃ - CF = CF₂); and 2-fluoro-1-propene (a chemical formula thereof is represented by an expression CH₃ - CF = CH₂).

In the foregoing embodiments, instead of using the HFC-32, HFC-125 may be used. In such a case, the proportion of the HFC-125 in the refrigerant mixture is preferably equal to or greater than 10% by mass and equal to or less than 30% by mass, and more preferably equal to or greater than 10% by mass and equal to or less than 20% by mass. The C₃HₘFₙ refrigerant may be the HFO-1234yf as in the foregoing embodiments, or may be refrigerant other than the HFO-1234yf.

In the foregoing embodiments, the HFC refrigerant may be refrigerant other than the HFC-32 and the HFC-125. Specifically, the HFC refrigerant includes HFC-134 (1, 1, 2, 2-tetrafluoroethane); HFC-134a (1, 1, 1, 2-tetrafluoroethane); HFC-143a (1, 1, 1-trifluoroethane); HFC-152a (1, 1-difluoroethane); HFC-161 (fluoroethane); HFC-227ea (1, 1, 1, 2, 3, 3, 3-heptafluoropropane); HFC-236ea (1, 1, 1, 2, 3, 3-hexafluoropropane); HFC-236fa (1, 1, 1, 3, 3, 3-hexafluoropropane); and HFC-365mfc (1,1, 1, 3, 3-pentafluorobutane).

In the foregoing embodiments, more than two types of HFC refrigerants may be used for the refrigerant mixture. Specifically, refrigerant mixture containing the HFC-125 and the HFC-32 may be used as the HFC refrigerant. The C₃HₘFₙ refrigerant may be the HFO-1234yf as in the foregoing embodiments, or may be refrigerant other than the HFO-1234yf.

In the foregoing embodiments, refrigerant mixture containing the C₃HₘFₙ refrigerant and hydrocarbons may be used. Specifically, as hydrocarbon refrigerant used for the refrigerant mixture, methane, ethane, propane, propene, butane, isobutene, pentane, 2-methylbutane, or cyclopentane may be used. A single type of or multiple types of hydrocarbon refrigerant(s) may be used. As in the foregoing embodiments, refrigerant mixture containing methane, ethane, propane, or propene increases the operating pressure of refrigerant. Thus, while reducing the influence of the pressure loss of refrigerant on the operation of the refrigeration apparatus (20), the actual operational efficiency of the refrigeration apparatus (20) can be improved. In this respect, the same is true for refrigerant mixture containing the C₃HₘFₙ refrigerant and dimethyl ether; refrigerant mixture containing the C₃HₘFₙ refrigerant and bis-trifluoromethyl-sulfide; refrigerant mixture containing the C₃HₘFₙ refrigerant and helium; and refrigerant mixture containing the HFO-1234yf and carbon dioxide, which will be described below.

In the foregoing embodiments, the refrigerant mixture containing the C₃HₘFₙ refrigerant and dimethyl ether may be used.

In the foregoing embodiments, the refrigerant mixture containing the C₃HₘFₙ refrigerant and bis-trifluoromethyl-sulfide may be used.

In the foregoing embodiments, the refrigerant mixture containing the C₃HₘFₙ refrigerant and helium may be used.

In the foregoing embodiments, the refrigerant mixture containing the HFO-1234yf and carbon dioxide may be used.

In the foregoing embodiments, the refrigeration apparatus (20) of the present invention may be applied to, e.g., a refrigeration apparatus for cooling food (refrigerators or freezers); a refrigeration apparatus in which an air conditioner is combined with a refrigerator or a freezer; and a refrigeration apparatus with a humidity adjusting function, in which heat of refrigerant circulating in a heat exchanger is used for heating/cooling adsorbent. In addition, in the embodiments, the heat source of the refrigerant circuit (10) is air, but such a heat source may be a water heat source or an underground heat source.

The foregoing embodiments have been set forth merely for purposes of preferred examples in nature, and are not intended to limit the scope, applications, and use of the invention.

### INDUSTRIAL APPLICABILITY

As described above, the present invention is useful for the refrigeration apparatus in which the refrigeration cycle is performed.

## Claims

1. A refrigeration apparatus, comprising:
a refrigerant circuit (10) in which a refrigeration cycle is performed by circulating refrigerant,
wherein the refrigerant circuit (10) is filled with refrigerant mixture in which the proportion of refrigerant represented by Molecular Formula 1: C₃HₘFₙ where "m" and "n" are integers equal to or greater than 1 and equal to or less than 5, and a relationship represented by an expression m + n = 6 is satisfied, and having a single double bond in a molecular structure is equal to or greater than 70% by mass and equal to or less than 94% by mass, and the proportion of HFC refrigerant is equal to or greater than 6% by mass and equal to or less than 30% by mass.

2. The refrigeration apparatus of claim 1, wherein
difluoromethane is used as the HFC refrigerant in the refrigerant mixture.

3. The refrigeration apparatus of claim 2, wherein
only difluoromethane is used as the HFC refrigerant in the refrigerant mixture, the proportion of the refrigerant represented by Molecular Formula 1: C₃HₘFₙ where "m" and "n" are the integers equal to or greater than 1 and equal to or less than 5, and the relationship represented by the expression m + n = 6 is satisfied, and having the single double bond in the molecular structure is equal to or greater than 77% by mass and equal to or less than 87% by mass, and the proportion of difluoromethane is equal to or greater than 13% by mass and equal to or less than 23% by mass.

4. The refrigeration apparatus of claim 3, wherein,
in the refrigerant mixture, the proportion of the refrigerant represented by Molecular Formula 1: C₃HₘFₙ where "m" and "n" are the integers equal to or greater than 1 and equal to or less than 5, and the relationship represented by the expression m + n = 6 is satisfied, and having the single double bond in the molecular structure is equal to or greater than 77% by mass and equal to or less than 79% by mass, and the proportion of difluoromethane is equal to or greater than 21% by mass and equal to or less than 23% by mass.

5. The refrigeration apparatus of claim 1, wherein
pentafluoroethane is used as the HFC refrigerant in the refrigerant mixture.

6. The refrigeration apparatus of claim 5, wherein,
in the refrigerant mixture, the proportion of pentafluoroethane is equal to or greater than 10% by mass and equal to or less than 30% by mass.

7. The refrigeration apparatus of claim 6, wherein,
in the refrigerant mixture, the proportion of pentafluoroethane is equal to or greater than 10% by mass and equal to or less than 20% by mass.

8. A refrigeration apparatus, comprising:
a refrigerant circuit (10) in which a refrigeration cycle is performed by circulating refrigerant,
wherein the refrigerant circuit (10) is filled with refrigerant mixture containing refrigerant represented by Molecular Formula 1: C₃HₘFₙ where "m" and "n" are integers equal to or greater than 1 and equal to or less than 5, and a relationship represented by an expression m + n = 6 is satisfied, and having a single double bond in a molecular structure, and hydrocarbons.

9. A refrigeration apparatus, comprising:
a refrigerant circuit (10) in which a refrigeration cycle is performed by circulating refrigerant,
wherein the refrigerant circuit (10) is filled with refrigerant mixture containing refrigerant represented by Molecular Formula 1: C₃HₘFₙ where "m" and "n" are integers equal to or greater than 1 and equal to or less than 5, and a relationship represented by an expression m + n = 6 is satisfied, and having a single double bond in a molecular structure, and dimethyl ether.

10. A refrigeration apparatus, comprising:
a refrigerant circuit (10) in which a refrigeration cycle is performed by circulating refrigerant,
wherein the refrigerant circuit (10) is filled with refrigerant mixture containing refrigerant represented by Molecular Formula 1: C₃HₘFₙ where "m" and "n" are integers equal to or greater than 1 and equal to or less than 5, and a relationship represented by an expression m + n = 6 is satisfied, and having a single double bond in a molecular structure, and bis-trifluoromethyl-sulfide.

11. A refrigeration apparatus, comprising:
a refrigerant circuit (10) in which a refrigeration cycle is performed by circulating refrigerant,
wherein the refrigerant circuit (10) is filled with refrigerant mixture containing refrigerant represented by Molecular Formula 1: C₃HₘFₙ where "m" and "n" are integers equal to or greater than 1 and equal to or less than 5, and a relationship represented by an expression m + n = 6 is satisfied, and having a single double bond in a molecular structure, and helium.

12. The refrigeration apparatus of any one of claims 1 to 11, wherein,
in the refrigerant mixture, 2, 3, 3, 3-tetrafluoro-1-propene is used as the refrigerant represented by Molecular Formula 1: C₃HₘFₙ where "m" and "n" are the integers equal to or greater than 1 and equal to or less than 5, and the relationship represented by the expression m + n = 6 is satisfied, and having the single double bond in the molecular structure.

13. A refrigeration apparatus, comprising:
a refrigerant circuit (10) in which a refrigeration cycle is performed by circulating refrigerant,
wherein the refrigerant circuit (10) is filled with refrigerant mixture containing 2, 3, 3, 3-tetrafluoro-1-propene and carbon dioxide.

14. The refrigeration apparatus of claim 1, 8, 9, 10, 11, or 13, wherein
a heat exchanger (11, 15) for exchanging heat between air and refrigerant is connected to the refrigerant circuit (10); and
the air exchanging heat with the refrigerant in the heat exchanger (11, 15) is supplied to a room.

15. The refrigeration apparatus of claim 14, wherein
only a heating operation is performed, in which air heated by refrigerant in the heat exchanger (11, 15) is supplied to a room.

16. The refrigeration apparatus of claim 14, wherein,
in the refrigerant circuit (10), an outdoor unit (22) provided outside a room is connected to indoor units (51) provided inside the room, through communication pipes (18, 19).

17. The refrigeration apparatus of claim 1, 8, 9, 10, 11, or 13, wherein
a heat exchanger (43) for exchanging heat between water and refrigerant is connected to the refrigerant circuit (10); and
the water is heated by the refrigerant in the heat exchanger (43).
